# EUROPEAN PATENT SPECIFICATION

(11) **EP 4 283 001 B1**
(45) Date of publication and mention of the grant of the patent: **24.07.2024**
(21) Application number: 23175601.6
(22) Date of filing: 26.05.2023
(51) Int. Cl.: C22C 21/02, B62D 29/00, B62D 21/07, C22B 21/00

(54) **RECYCLED ALUMINIUM FRAME FOR A ROAD VEHICLE AND CORRESPONDING PRODUCTION METHOD**
RECYCLIERTES ALUMINIUMGERÜST FÜR EIN STRASSENFAHRZEUG UND ENTSPRECHENDES HERSTELLUNGSVERFAHREN
CADRE EN ALUMINIUM RECYCLÉ POUR VÉHICULE ROUTIER ET PROCÉDÉ DE FABRICATION CORRESPONDANT

(30) Priority: 27.05.2022 IT 202200011183
(43) Date of publication of application: 29.11.2023
(73) Proprietor: FERRARI S.p.A., 41100 Modena (IT)
(72) Inventor: MUCI, Roberto, 41100 Modena (IT)
(74) Representative: Studio Torta S.p.A.

(56) References cited:
- JP-A- 2019 189 907
- US-A1- 2022 017 997
- CHEN RUI ET AL: "Correlation of solidification microstructure refining scale, Mg composition and heat treatment conditions with mechanical properties in Al-7Si-Mg cast aluminum alloys", MATERIALS SCIENCE, ELSEVIER, AMSTERDAM, NL, vol. 685, 10 December 2016 (2016-12-10), pages 391 - 402, XP029896614, ISSN: 0921-5093, DOI: 10.1016/J.MSEA.2016.12.051

## Description

### CROSS-REFERENCE TO RELATED APPLICATIONS

This patent application claims priority from Italian patent application no. 102022000011183 filed on May 27, 2022.

### TECHNICAL FIELD

The present invention relates to a recycled aluminium frame for a road vehicle and to a corresponding production method.

### PRIOR ART

The automotive industry is looking, with increasing interest, at aluminium as main material for the manufacturing of frames since a frame made of aluminium alloy, the performance being equal, allows reducing the weight in a substantial manner (with a beneficial effect on consumption and performance) with respect to the more traditional steel; furthermore, aluminium is 100% recyclable and thus allows reducing the environmental impact of cars (by way of example the equivalent CO2 necessary for the production of one kg of primary aluminium from the mineral of bauxite is 10 to 30 times greater than the equivalent CO2 necessary for the production of one kg of secondary aluminium from recycled aluminium scraps).

However, currently, the aluminium used for car frames, particularly for high-performance sports cars, is exclusively virgin (primary) aluminium, since recycled (secondary) aluminium offers lower mechanical characteristics. Consequently, recycled (secondary) aluminium is used only for manufacturing non-structural objects, i.e. objects which in use are not subjected to high mechanical stresses.

Patent application JP2019189907A describes an aluminium-silicon-magnesium-based aluminium alloy plate suitable for being used for the components of a car; in particular, the aluminium alloy contains aluminium (also recycled) as main component, 4% to 7% by mass of silicon, 0.3% to 0.8% by mass of magnesium and not more than 0.6% by mass of iron.

Patent application US2022017997A1 describes a part of a frame or of a structural body of a vehicle manufactured with a blended material formed by mixing an improved aluminium alloy and a recycled aluminium alloy. The recycled aluminium alloy can be obtained from road wheels. The recycled aluminium alloy comprises, in weight percentage with respect to the total weight of the recycled aluminium alloy, 6.5% to 7.5% of silicon, up to 0.25% of iron, up to 0.2% of copper, up to 0.1% of manganese, 0.25% to 0.45% of magnesium, up to 0.1% of zinc, up to 0.2% of titanium, and a balance of aluminium.

### DESCRIPTION OF THE INVENTION

The object of the present invention is to provide a recycled aluminium frame for a road vehicle and a corresponding production method.

According to the present invention, a recycled aluminium frame for a road vehicle and a corresponding production method are provided, according to what is claimed by the appended claims.

The claims describe preferred embodiments of the present invention forming integral part of the present description.

### BRIEF DESCRIPTION OF THE DRAWINGS

The present invention will now be described with reference to the accompanying drawings, which illustrate a non-limiting example embodiment thereof:
- Figure 1 is a perspective view of a road vehicle; and
- Figure 2 is a perspective view of a frame of the road vehicle of Figure 1.

### PREFERRED EMBODIMENTS OF THE INVENTION

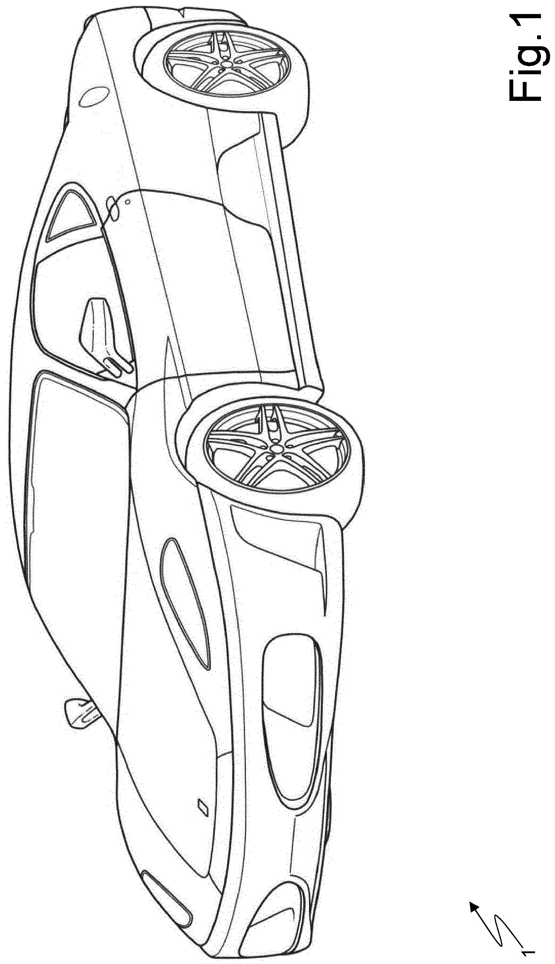

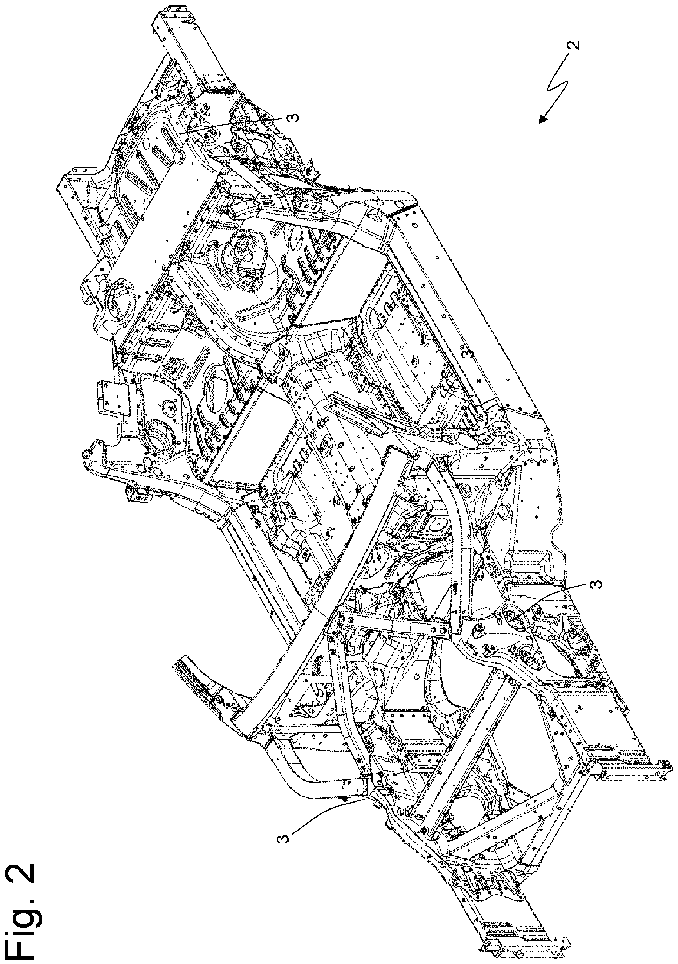

In Figure 1, reference numeral 1 indicates, as a whole, a road vehicle provided with a frame 2 (illustrated in Figure 2) .

According to what is illustrated in Figure 2, the frame 2 comprises a plurality of components which are joined together by means of welding, by means of screws, or by means of rivets. All or anyway most of the components of the frame are made of aluminium alloy and there can also be some components made of high-strength steel.

All the components of the frame 2 (or at least most of the components of the frame 2) are manufactured by using an aluminium alloy comprising: 6% to 8% by weight of silicon (i.e. the weight of silicon is comprised between 6% and 8% of the total weight of the aluminium alloy), 0.18% to 0.28% by weight of iron (i.e. the weight of iron is comprised between 0.18% and 0.28% of the total weight of the aluminium alloy) and a balance of aluminium so that the aluminium is 90% to 94% by weight (i.e. the amount of aluminium is such to reach, together with the other components, 100% of the weight with the constraint that the weight of aluminium has to anyway be comprised between 90% and 94% of the total weight of the aluminium alloy). With this type of aluminium alloy, it is possible to use recycled (secondary) aluminium also at 100%, i.e. it is possible to use only and completely recycled aluminium. Alternatively, the fraction of recycled (secondary) aluminium could be a bit lower but still relevant, for example to an extent of at least 80% or to an extent of at least 90%.

According to a preferred embodiment, the aluminium alloy comprises: 0.20% to 0.25% by weight of iron and in particular 0.23% by weight of iron.

Besides aluminium, silicon and iron, the aluminium alloy also comprises other components and in particular: optionally 0.01% to 0.04% by weight of copper, optionally 0.005% to 0.015% by weight of manganese, optionally 0.25% to 0.45% by weight of magnesium, 0.01% to 0.04% by weight of chromium, 0.01% to 0.04% by weight of zinc, 0.01% to 0.04% by weight of lead, 0.01% to 0.04% by weight of tin, and optionally 0.12% to 0.25% by weight of titanium.

The weight percentages of the single components with respect to the total weight of the aluminium alloy are identically valid (i.e. remain exactly the same) if considered as mass percentages of the single components with respect to the total mass of the aluminium alloy.

The above-described frame 2 has numerous advantages.

Firstly, the particular aluminium alloy used for manufacturing the above-described frame 2 allows utilizing also up to 100% of recycled (secondary) aluminium with an evident reduction in the environmental impact: by way of example, the equivalent CO2 necessary for the production of one kg of primary aluminium from the mineral of bauxite is 10 to 30 times greater than the equivalent CO2 necessary for the production of one kg of secondary aluminium from recycled aluminium scraps.

Furthermore, the particular aluminium alloy used for manufacturing the above-described frame 2 has mechanical characteristics totally equivalent to the aluminium alloys which use virgin (primary) aluminium obtained directly from the mineral of bauxite.

Finally, the particular aluminium alloy used for manufacturing the above-described frame 2 uses standard components that can be easily found on the market and thus does not have a higher production cost with respect to the other aluminium alloys present on the market.

### LIST OF THE REFERENCE NUMERALS OF THE FIGURES

- 1: road vehicle
- 2: frame

## Claims

1. A frame (2) for a road vehicle (1) comprising components manufactured using an aluminium alloy comprising:
• 6% to 8% by weight of silicon,
• 0.18% to 0.28% by weight of iron,
• optionally 0.01% to 0.04% by weight of copper,
• optionally 0.005% to 0.015% by weight of manganese,
• optionally 0.25% to 0.45% by weight of magnesium,
• optionally 0.12% to 0.25% by weight of titanium, and
• a balance of aluminium so that the aluminium is 90% to 94% by weight;
the frame (2) is **characterized in that** the aluminium alloy also comprises:
• 0.01% to 0.04% by weight of chromium,
• 0.01% to 0.04% by weight of zinc,
• 0.01% to 0.04% by weight of lead.

2. The frame (2) according to claim 1, wherein the aluminium alloy comprises 0.20% to 0.25% by weight of iron.

3. The frame (2) according to claim 1, wherein the aluminium alloy comprises 0.23% by weight of iron.

4. The frame (2) according to claim 1, 2 or 3, wherein the aluminium alloy comprises 0.01% to 0.04% by weight of copper.

5. The frame (2) according to one of the claims from 1 to 4, wherein the aluminium alloy comprises 0.005% to 0.015% by weight of manganese.

6. The frame (2) according to one of the claims from 1 to 5, wherein the aluminium alloy comprises 0.25% to 0.45% by weight of magnesium.

7. The frame (2) according to one of the claims from 1 to 6, wherein the aluminium alloy comprises 0.12% to 0.25% by weight of titanium.

8. A method to manufacture components of a frame (2) for a road vehicle (1) using an aluminium alloy comprising:
• 6% to 8% by weight of silicon,
• 0.18% to 0.28% by weight of iron,
• optionally 0.01% to 0.04% by weight of copper,
• optionally 0.005% to 0.015% by weight of manganese,
• optionally 0.25% to 0.45% by weight of magnesium,
• optionally 0.12% to 0.25% by weight of titanium, and
• a balance of aluminium so that the aluminium is 90% to 94% by weight;
wherein the extent of recycled aluminium is at least 80%;
the method is **characterized in that** the aluminium alloy also comprises:
• 0.01% to 0.04% by weight of chromium,
• 0.01% to 0.04% by weight of zinc,
• 0.01% to 0.04% by weight of lead.

9. The method according to claim 8, wherein the extent of recycled aluminium is at least 90%.

10. The method according to claim 8, wherein the extent of recycled aluminium is 100%.

## Patentansprüche

1. Rahmen (2) für ein Straßenfahrzeug (1) mit Komponenten, die unter Verwendung einer Aluminiumlegierung hergestellt sind, aufweisend:
• 6 bis 8 Gew.-% Silicium,
• 0,18 bis 0,28 Gew.-% Eisen,
• optional 0,01 bis 0,04 Gew.-% Kupfer,
• optional 0,005 bis 0,015 Gew.-% Mangan,
• optional 0,25 bis 0,45 Gew.-% Magnesium,
• optional 0,12 bis 0,25 Gew.-% Titan und
• einen Rest an Aluminium, sodass der Aluminiumanteil 90 bis 94 Gew.-% beträgt;
wobei der Rahmen (2) **dadurch gekennzeichnet ist, dass** die Aluminiumlegierung ebenfalls aufweist:
• 0,01 bis 0,04 Gew.-% Chrom,
• 0,01 bis 0,04 Gew.-% Zink,
• 0,01 bis 0,04 Gew.-% Blei.

2. Rahmen (2) nach Anspruch 1, wobei die Aluminiumlegierung 0,20 bis 0,25 Gew.-% Eisen aufweist.

3. Rahmen (2) nach Anspruch 1, wobei die Aluminiumlegierung 0,23 Gew.-% Eisen aufweist.

4. Rahmen (2) nach Anspruch 1, 2 oder 3, wobei die Aluminiumlegierung 0,01 bis 0,04 Gew.-% Kupfer aufweist.

5. Rahmen (2) nach einem der Ansprüche 1 bis 4,
wobei die Aluminiumlegierung 0,005 bis 0,015 Gew.-% Mangan aufweist.

6. Rahmen (2) nach einem der Ansprüche 1 bis 5,
wobei die Aluminiumlegierung 0,25 bis 0,45 Gew.-% Magnesium aufweist.

7. Rahmen (2) nach einem der Ansprüche 1 bis 6,
wobei die Aluminiumlegierung 0,12 bis 0,25 Gew.-% Titan aufweist.

8. Verfahren zum Herstellen von Komponenten eines Rahmens (2) für ein Straßenfahrzeug (1) unter Verwendung einer Aluminiumlegierung, aufweisend:
• 6 bis 8 Gew.-% Silicium,
• 0,18 bis 0,28 Gew.-% Eisen,
• optional 0,01 bis 0,04 Gew.-% Kupfer,
• optional 0,005 bis 0,015 Gew.-% Mangan,
• optional 0,25 bis 0,45 Gew.-% Magnesium,
• optional 0,12 bis 0,25 Gew.-% Titan und
• einen Rest an Aluminium, sodass der Aluminiumanteil 90 bis 94 Gew.-% beträgt;
wobei der Anteil an rezykliertem Aluminium mindestens 80 % beträgt;
das Verfahren **dadurch gekennzeichnet ist, dass** die Aluminiumlegierung auch aufweist:
• 0,01 bis 0,04 Gew.-% Chrom,
• 0,01 bis 0,04 Gew.-% Zink,
• 0,01 bis 0,04 Gew.-% Blei.

9. Verfahren nach Anspruch 8, wobei der Anteil an rezykliertem Aluminium mindestens 90 % beträgt.

10. Verfahren nach Anspruch 8, wobei der Anteil an rezykliertem Aluminium 100 % beträgt.

## Revendications

1. Cadre (2) pour un véhicule routier (1) comprenant des composants fabriqués au moyen d'un alliage d'aluminium comprenant :
- de 6 % à 8 % en poids de silicium,
- de 0,18 % à 0,28 % en poids de fer,
- optionnellement de 0,01 % à 0,04 % en poids de cuivre,
- optionnellement de 0,005 % à 0,015 % en poids de manganèse,
- optionnellement de 0,25 à 0,45 % en poids de magnésium,
- optionnellement de 0,12 % à 0,25 % en poids de titane, et
- un reste composé d'aluminium de sorte que l'aluminium représente de 90 % à 94 % en poids ;
le cadre (2) est **caractérisé en ce que** l'alliage d'aluminium comprend également :
- de 0,01 % à 0,04 % en poids de chrome,
- de 0,01 % à 0,04 % en poids de zinc,
- de 0,01 % à 0,04 % en poids de plomb.

2. Cadre (2) selon la revendication 1, dans lequel l'alliage d'aluminium comprend de 0,20 % à 0,25 % en poids de fer.

3. Cadre (2) selon la revendication 1, dans lequel l'alliage d'aluminium comprend 0,23 % en poids de fer.

4. Cadre (2) selon la revendication 1, 2 ou 3, dans lequel l'alliage d'aluminium comprend de 0,01 % à 0,04 % en poids de cuivre.

5. Cadre (2) selon l'une des revendications 1 à 4, dans lequel l'alliage d'aluminium comprend de 0,005 % à 0,015 % en poids de manganèse.

6. Cadre (2) selon l'une des revendications 1 à 5, dans lequel l'alliage d'aluminium comprend de 0,25 % à 0,45 % en poids de magnésium.

7. Cadre (2) selon l'une des revendications 1 à 6, dans lequel l'alliage d'aluminium comprend de 0,12 % à 0,25 % en poids de titane.

8. Méthode de fabrication de composants d'un cadre (2) pour un véhicule routier (1) utilisant un alliage d'aluminium comprenant :
- de 6 % à 8 % en poids de silicium,
- de 0,18 % à 0,28 % en poids de fer,
- optionnellement de 0,01 % à 0,4 % en poids de cuivre,
- optionnellement de 0,005 % à 0,015 % en poids de manganèse,
- optionnellement de 0,25 % à 0,45 % en poids de magnésium,
- optionnellement de 0,12 % à 0,25 % en poids de titane, et
- un reste composé d'aluminium de sorte que l'aluminium représente de 90 % à 94 % en poids ;
dans laquelle l'étendue d'aluminium recyclé est d'au moins 80 % ;
la méthode est **caractérisée en ce que** l'alliage d'aluminium comprend également :
- de 0,01 % à 0,04 % en poids de chrome,
- de 0,01 % à 0,04 % en poids de zinc,
- de 0,01 % à 0,04 % en poids de plomb.

9. Méthode selon la revendication 8, dans laquelle l'étendue d'aluminium recyclé est d'au moins 90 %.

10. Méthode selon la revendication 8, dans laquelle l'étendue d'aluminium recyclé est de 100 %.
